# EUROPÄISCHE PATENTSCHRIFT

(11) **EP 4 420 974 B1**
(45) Veröffentlichungstag und Bekanntmachung des Hinweises auf die Patenterteilung: **01.04.2026**
(21) Anmeldenummer: 23158695.9
(22) Anmeldetag: 27.02.2023
(51) Int. Cl.: B64C 1/06, B64F 5/10

(54) **VERFAHREN ZUR HERSTELLUNG EINES RUMPFSTRUKTURBAUTEILS FÜR EINEN DREIECKSBEREICH UND EINSTÜCKIGES RUMPFSTRUKTURBAUTEIL**
METHOD FOR MANUFACTURING A FUSELAGE STRUCTURAL COMPONENT FOR A TRIANGULAR AREA AND A ONE-PIECE FUSELAGE STRUCTURAL COMPONENT
PROCÉDÉ DE FABRICATION D'UN COMPOSANT DE STRUCTURE DE FUSELAGE POUR UNE ZONE TRIANGULAIRE ET COMPOSANT DE STRUCTURE DE FUSELAGE D'UNE SEULE PIÈCE

(43) Veröffentlichungstag der Anmeldung: 28.08.2024
(73) Patentinhaber: Airbus Operations GmbH, 21129 Hamburg (DE)
(72) Erfinder: Gross, Claus-Peter, 21129 Hamburg (DE)
(74) Vertreter: Schornack, Oliver

(56) Entgegenhaltungen:
- EP-A2- 2 695 726
- DE-A1- 102007 030 026
- DE-A1- 102017 131 044
- GB-A- 159 351
- US-A- 1 766 961
- US-A1- 2013 306 795

## Beschreibung

Die Erfindung betrifft ein Verfahren zur Herstellung eines Rumpfstrukturbauteils für einen Dreiecksbereichs eines Flugzeugs sowie ein einstückiges Rumpfstrukturbauteil und ein Flugzeug mit entsprechendem Rumpfstrukturbauteil. Insbesondere betrifft die Erfindung ein Verfahren zur Herstellung eines einstückigen Rumpfstrukturbauteils mit angeformten Flanschen sowie ein entsprechendes Rumpfstrukturbauteil und Flugzeug.

Im Unterdeck eines Flugzeugs, also in einem Bereich des Flugzeugrumpfs unterhalb eines Zwischenbodens, wie zum Beispiel in einem Cargodeck, befinden sich üblicherweise zwei sogenannte Dreiecksbereiche. Diese sind in einer Querschnittsansicht des Flugzeugs jeweils durch die Außenstruktur des Flugzeugrumpfs (zum Beispiel die Spanten), die Querholme des Zwischenbodens (zum Beispiel die Träger des Zwischenbodens) und sogenannte Z-Streben, die jeweils einen Träger des Zwischenbodens auf einem Spant abstützen und üblicherweise vertikal verlaufen, definiert, siehe beispielsweise die Offenlegung von Dokumenten GB159351 A1 und US2013306795 A1. Die Z-Streben dienen auch der Aussteifung der Flugzeugstruktur unterhalb des Zwischenbodens.

Jede der Z-Streben unterhalb des Zwischenbodens (für gewöhnlich zwei) liegt im äußeren Bereich des Cargodecks und ist daher für das Personal während der Installation der Z-Streben schwierig zugänglich. Zum Beispiel ist die Arbeitshöhe aufgrund des Zwischenbodens bereits beschränkt, während der runde Flugzeugrumpf einen immer schräger werdenden Boden bedingt. Dies führt zu ergonomisch ungünstigen Bedingungen für das Personal.

Der Erfindung liegt daher die Aufgabe zugrunde, ein Herstellverfahren, Rumpfstrukturbauteil und Flugzeug bereitzustellen, die eine vereinfachte Montage des Dreiecksbereichs ermöglichen.

Diese Aufgabe wird durch ein Verfahren mit den Merkmalen der Ansprüche 1 und 7 sowie ein Rumpfstrukturbauteil mit den Merkmalen der Ansprüche 11 und 12 und ein Flugzeug mit den Merkmalen der Ansprüche 13-15 gelöst.

Die abhängigen Ansprüche definieren beispielhafte Ausführungsformen.

Gemäß einem ersten Aspekt zum besseren Verständnis der vorliegenden Offenbarung umfasst ein Verfahren zur Herstellung eines Rumpfstrukturbauteils für einen Dreiecksbereich eines Flugzeugs ein Bereitstellen einer einstückigen Tafel eines Spantmaterials, wobei die Tafel eine Öffnung aufweist. Die einstückige Tafel ist einerseits aus einem durchgängigen Material gefertigt, muss also nicht (aus einer Vielzahl von Komponenten) zusammengesetzt werden. Unter einer Tafel ist hier ein im wesentlichen ebenes Bauteil gemeint, dessen Breite und Länge viel größer sind als dessen Dicke.

Die Öffnung in der Tafel ist in einem beliebigen Bereich der Tafel angeordnet. Die Öffnung entspricht einer Aussparung der Tafel, an der kein Spantmaterial vorgesehen ist. Entsprechend weist die Öffnung eine Innenkante der Tafel auf. Da es sich um ein Rumpfstrukturbauteil handelt, welches einen Abschnitt einer Rumpfstruktur eines Flugzeugs bildet, weist die Tafel eine weitere Innenkante auf, die im eingebauten Zustand des Rumpfstrukturbauteils in das Innere des Flugzeugs zeigt. Entsprechend weist die Tafel mindestens eine Außenkante auf, die im eingebauten Zustand des Rumpfstrukturbauteils von einem Zentrum des Flugzeugs weg zeigt.

Ferner umfasst das Verfahren ein Verformen mindestens einer die Öffnung bildenden Innenkante der Tafel zu einem Innenflansch, und ein Verformen mindestens einer Außenkante der Tafel zu einem Außenflansch. Unter einem Flansch ist somit eine Verformung der Tafel an der Innenkante zu verstehen, die aus der Ebene der Tafel hervortritt. Dabei kann der Innenflansch und der Außenflansch in die gleiche Richtung weisen oder in unterschiedliche Richtungen weisen.

Die einstückige und verformte Tafel bildet jeweils an die Öffnung angrenzend einen Spantabschnitt, einen Bodenträger und eine Vertikalstütze. Mit anderen Worten bildet die verformte Tafel einen Dreiecksbereich, der die dreiecksförmige Öffnung und darum herum einen Abschnitt eines Spants des Flugzeugs, einen Abschnitt eines horizontalen Bodenträgers und einen vertikalen Träger umfasst. Der vertikale Träger entspricht in ihrer Funktion einer Z-Strebe oder auch Vertikalstütze.

Da diese Komponenten, die den Dreiecksbereich bilden, aus der einstückigen Tafel geformt werden, entfällt der gesamte Montageprozess eines üblichen Dreiecksbereichs. Hierbei werden gewöhnlich Querholme für den Boden oder gesamte Bodenelemente am Spant befestigt. Anschließend wird unter dem Boden die Z-Strebe eingebaut und an dem Querholm und dem Spant mechanisch befestigt, um den Dreiecksbereich zu bilden. Die hierfür notwendigen und ergonomisch ungünstigen Arbeiten entfallen vollständig. Die Anzahl der Bauteile wird ebenfalls deutlich reduziert.

Zudem kann das Verformen der Tafel außerhalb des Flugzeugrumpfs stattfinden, sodass das Rumpfstrukturbauteil zeitlich und auch wirklich unabhängig hergestellt werden kann.

Da die Tafel einstückigen ist, wird das so hergestellte Rumpfstrukturbauteil auch leichter im Vergleich zu bisher üblichen Konstruktionen. Zum einen entfallen sämtliche Befestiger (Bolzen, Muttern, etc.). Zum anderen sind auch keine überlappenden Bereiche notwendig, wie zum Beispiel jeweils ein U-förmiges oder L-förmiges Ende oben und unten an der Z-Strebe, das den Querholm bzw. den Spant umschließt und überlappt.

Der Innenflansch und Außenflansch bildet eine Versteifung des entsprechenden Abschnitts der Tafel, da sich der Flansch in eine andere Richtung (oder Ebene) erstreckt als die Tafel, sowohl vor als auch nach dem Verformen. Dadurch werden lediglich die Verformungsschritte benötigt, um den gesamten Dreiecksbereich einschließlich statisch notwendiger Strukturen herzustellen.

Das so hergestellte Rumpfstrukturbauteil kann an weitere Spantabschnitte angeschlossen werden. Hierbei können übliche Verbindungsmethoden verwendet werden, wie zum Beispiel Schweißen, Kleben, Verschrauben oder Nieten. Für gewöhnlich wird ein vollständiger Spant aus mehreren Spantabschnitten hergestellt, sodass das hier hergestellte Rumpfstrukturbauteil mit Dreiecksbereich einfach in den Herstellungsprozess des Spants integriert werden kann.

In einer Implementierungsvariante kann das Bereitstellen der Tafel ein Entfernen des Spantmaterials aus der Tafel im Bereich der Öffnung umfassen.

So kann gemäß der Erfindung die Tafel aus einem Metall oder einer Legierung gefertigt sein. Diese kann durch Walzen hergestellt werden, sodass die Tafel einem Blech entspricht. Lediglich beispielhaft kann das Entfernen ein Fräsen oder Stanzen umfassen, wobei die Öffnung in das Metall oder die Legierung gefräst oder gestanzt wird. Dieses Herstellungsverfahren ist einfach in der Durchführung und weist daher geringe Kosten und wenig benötigte Arbeitszeit auf.

In einer anderen beispielhaften, nicht zum beanspruchten Gegenstand gehörenden Implementierung, kann die Tafel aus einem Verbundmaterial bestehen. Zum Beispiel kann die Tafel aus einem Gewebe (Glasfaser, Kohlefaser, o. ä.) mit einer aushärtbaren Matrix (Epoxidharz, thermoplastischer Kunststoff, o. ä.) bestehen. In diesem Fall kann die Öffnung zwar auch gefräst oder gestanzt werden. Allerdings kann das Verbundmaterial bereits mit einer Öffnung hergestellt werden.

In einer Implementierungsvariante kann das Verformen (sowohl des Innenflansches als auch des Außenflansches) durch Pressen erfolgen. Bei einem Metall oder thermoplastischen Kunststoff lässt sich die Innenkante bzw. Außenkante durch Pressen der Tafel zwischen einem Stempel und einer Negativform leicht durch plastisches Verformen herstellen. Je nach Material kann die Tafel dabei auch zumindest partiell erwärmt werden.

Beim Pressen kann die Negativform aus jedem beliebigen Material sein, zum Beispiel Holz, Metall oder Kunststoff. Auch der Stempel kann aus jedem beliebigen Material gefertigt sein, zum Beispiel Holz, Metall, Kunststoff oder Gummi oder einer Kombination daraus.

Durch Pressen lässt sich das Rumpfstrukturbauteil auf einfache Weise und besonders schnell herstellen, da die statisch notwendigen Strukturen, wie zum Beispiel der Innenflansch und der Außenflansch, in einem Arbeitsschritt hergestellt werden können. Alternativ oder zusätzlich kann der Innenflansch und/oder Außenflansch durch Falzen hergestellt werden. Dadurch kann möglicherweise ein präziserer Knick des Flansches ausgebildet werden. Auch lässt sich beim Falzen der Flansch schneiden, wodurch jede beliebige Länge des Flansches präzise hergestellt werden kann. Gegenüber Pressen ist das Falzen jedoch zeitaufwendiger.

In einer weiteren Implementierungsvariante kann das Verfahren ferner ein Einbringen eines Verstärkungselements umfassen. Das Verstärkungselement liegt dabei vorzugsweise an einem flächigen Abschnitt der Tafel und an dem Innenflansch an. Beispielsweise kann das Verstärkungselement eine Aufdopplung in einem bestimmten Abschnitt des Rumpfstrukturbauteils bilden. Dabei kann das Verstärkungselement einen Querschnitt haben, der dem des entsprechenden Abschnitts des Rumpfstrukturbauteils entspricht, sodass in Querschnittsansicht das Verstärkungselement zumindest zu großen Teilen dem Abschnitt des Rumpfstrukturbauteils folgt und an diesem flächig anliegt.

Ebenfalls als nicht zum beanspruchten Gegenstand gehörendes Beispiel kann das Verstärkungselement eine Aufdopplung auf einem Flansch sein. Dadurch wird der Flansch statisch verstärkt. Insbesondere an einem oder mehreren Flanschen des Bodenträgers und/oder an der Vertikalstütze kann ein oder mehrere Verstärkungselemente angebracht werden.

Das Verstärkungselement kann auch an einem anzubringenden Bodenelement oder Zwischenboden vorgesehen sein. Beim Zusammenbau von Bodenelement bzw. Zwischenboden und Rumpfstrukturbauteil wird dann erst die Verstärkung des Flansches (beispielsweise durch entsprechende Aufdopplung) erzielt.

Das Verstärkungselement kann an dem Rumpfstrukturbauteil durch Schweißen, Kleben, Verschrauben oder Nieten befestigt werden.

In noch einer weiteren Implementierungsvariante kann das Verstärkungselement mindestens einen Fortsatz aufweisen, der sich von einem Ende des Innenflansches aus erstreckt und einen Bogen aufweist. Dabei kann sich insbesondere ein Abschnitt des Verstärkungselements, das an dem Innenflansch anliegt, über das Ende des Innenflansches hinaus erstrecken. Dies erhöht die Stabilität des gesamten Rumpfstrukturbauteils

Beispielsweise kann der Bogen des Verstärkungselements entlang einer Ecke der Öffnung in der Tafel verlaufen. Dies ermöglicht, den mindestens einen Innenflansch entlang gerade verlaufender Innenkanten der Öffnung auszubilden und nicht im Bereich der Ecke der Öffnung, was durch Verformen schwieriger hergestellt werden kann. Der Bogen des Verstärkungselements übernimmt dann die Aufgabe der Verstärkung der Ecke.

Ferner kann der Bogen des Verstärkungselements einen weiteren Innenflansch überlappen und/oder an diesem befestigt sein. Dadurch können zwei benachbarte Innenflansche über den Bogen mechanisch miteinander verbunden und die Ecke statisch ertüchtigt und verstärkt werden.

Die Dicke des Materials des Verstärkungselements kann entsprechend dem zu verstärkenden Bauteil ausgewählt werden. Selbstverständlich können auch mehrere Verstärkungselemente an dem Rumpfstrukturbauteil angebracht werden, um entsprechende Bereiche des Rumpfstrukturbauteils statisch zu ertüchtigen. Durch das Einbringen eines oder mehrere Verstärkungselemente kann die Tafel (und somit das übrige Rumpfstrukturbauteil) mit einer einheitlichen Dicke bereitgestellt werden. Dies vereinfacht den Herstellungsprozess der Tafel. Auch das Verformen der Kanten zu einem jeweiligen Flansch benötigt die gleiche Verformungsenergie. Beispielsweise können alle Innenflansche gleichzeitig mit einem Vorgang (zum Beispiel einem Pressvorgang) an geformt werden, was durch eine einheitliche Dicke der Tafel begünstigt wird.

In einer anderen, nicht zum beanspruchten Gegenstand gehörenden Implementierungsvariante kann das Bereitstellen der einstückigen Tafel ein Bereitstellen einer Tafel mit Bereichen unterschiedlicher Dicke umfassen. Zum Beispiel kann die Tafel (vor den Schritten des Verformens) als Blech oder flaches Bauteil mit unterschiedlich dicken Bereichen (unterschiedlich starken Bereichen) hergestellt und bereitgestellt werden. Somit lässt sich die Tafel bereits mit einem integrierten Verstärkungselement bzw. mit verstärkten Bereichen bereitstellen.

Diese Bereiche unterschiedlicher Dicke können zum Beispiel durch Walzen oder Pressen mit entsprechenden Schablonen/Formen/Stempeln erzielt werden. Alternativ oder zusätzlich können Abschnitte der Tafel auch abgeschliffen oder abgefräst werden, um eine dünnere Schichtdicke zu erhalten. Ebenfalls alternativ oder zusätzlich kann beim Herstellen der Tafel, insbesondere bei einem Kunststoffmaterial, mittels entsprechender dreidimensionaler Formen eine unterschiedliche Dicke der Tafel erzielt werden.

Die so hergestellte Tafel kann auf zusätzliche Verstärkungselemente verzichten. Jedoch ist der Herstellungsaufwand für die Tafel größer, sodass eine Abwägung stattfinden muss, welche Art der Verstärkung eingesetzt wird.

Lediglich als Beispiel kann insbesondere in einem Bereich, in dem sich der Spantabschnitt mit dem Bodenträger und/oder der Spantabschnitt mit der Vertikalstütze schneidet, die Tafel dicker ausgebildet sein. Ebenso ist es möglich, die Tafel in dem Bereich, in dem sich der Bodenträger mit der Vertikalstütze schneidet, dicker auszubilden. In diesen Bereichen werden Kräfte in den jeweils anderen Abschnitt und insbesondere in den Spantabschnitt eingeleitet. Daher entspricht eine dickere Tafel in diesem Bereich einer Verstärkung, die eine Verformung, wie zum Beispiel ein Ausbeulen und/oder Knicken, verhindert.

Als weiteres, nicht zum beanspruchten Gegenstand gehörendes Beispiel können Bereiche, die bei dem Verformen zu einem Flansch geformt werden, mit einer dickeren Tafelstärke bereitgestellt werden. Dadurch ist es möglich, bereits verstärkte Flansche an dem Rumpfstrukturbauteil vorzusehen.

In einer anderen Implementierungsvariante kann das Verformen einer Innenkante zu dem Innenflansch ein Verformen mehrerer Innenkanten zu einem jeweiligen Innenflansch umfassen. An jeder verformten Innenkante wird somit ein Flansch ausgebildet. Dabei ist in einer Ecke zwischen zwei Innenkanten der Innenflansch unterbrochen. Dies vereinfacht das Verformen und ermöglicht einen scharfen Knick zwischen Tafel und Innenflansch. Ebenfalls ist es möglich, ein Verformen der Tafel auch über 90° hinaus zu erzielen, was zum Beispiel für das Anbringen weiterer Komponenten notwendig sein kann.

Alternativ kann das Verformen einer Innenkante zu dem Innenflansch ein Verformen mehrerer Innenkanten zu einem einzelnen, in mindestens einer Ecke zwischen zwei Innenkanten durchgängig geformten Innenflansch umfassen. Mit anderen Worten ist die Innenkante weiterhin durchgehend, obwohl sie nach dem Verformen (in Aufsicht auf die Tafel) an zwei schräg zueinander angeordneten Innenkanten durchgehend einen Innenflansch bildet. Dabei kann der durchgängig geformte Innenflansch an der Ecke rund ausgebildet sein. Dies erhöht die Versteifung des Rumpfstrukturbauteils in dem Bereich an der Ecke der Öffnung. Somit kann auf ein gesondertes Verstärkungselement verzichtet werden.

In noch einer anderen, nicht zum beanspruchten Gegenstand gehörender Implementierungsvariante kann der durchgängig geformte Innenflansch unterschiedliche Höhen aufweisen. Unter Höhe des Innenflansches ist hier ein Abstand der Innenkante (nun des Flansches) zur Ebene der (übrigen) Tafel, oder alternativ die Länge des Flansches von der ebenen Tafel bis zu der verformten Innenkante, zu verstehen. Eine größere Höhe eines Flansches bedeutet eine größere Verstärkung in diesem Bereich der Tafel durch den so gebildeten "L-Träger". In Bereichen, wo eine große Verstärkung statisch nicht notwendig ist, kann die Höhe des Flansches kleiner ausfallen. Lediglich beispielhaft kann die Innenkante entlang des Spantabschnitts zu einem Innenflansch geringerer Höhe ausgebildet werden, während in den Bereichen der Ecken der Öffnung sowie entlang des Bodenträgers und der Vertikalstütze ein Innenflansch größerer Höhe ausgebildet wird.

Alternativ kann der Innenflansch in den Bereichen der Ecken der Öffnung eine geringere Höhe aufweisen als in den (lang gestreckten) Bereichen des Bodenträgers, der Vertikalstütze und/oder des Spantabschnitts. Dies vereinfacht das Verformen der Außenkante der Tafel im Bereich der Ecken.

Eine beispielhafte Höhe des Innenflansches liegt zwischen 5 mm und 30 mm, vorzugsweise zwischen 5 mm und 15 mm, und besonders bevorzugt bei 10 mm oder 10,4 mm. Dies gilt insbesondere für Bereiche mit der größeren Höhe des Innenflansches. Die Bereiche mit geringerer Höhe können hiervon abhängen und beliebig gewählt werden, um die statischen Bedingungen und/oder Verformungsmöglichkeiten einzuhalten.

In einer weiteren Implementierungsvariante kann der durchgängig geformte Innenflansch in einer Ecke zwischen zwei Innenkanten einen Winkel zu der Tafel von 110° bis 140°, vorzugsweise von 120° bis 130°, aufweisen. Mit anderen Worten wird die Innenkante in der Ecke der Öffnung um 70° bis 40°, vorzugsweise um 60° bis 50°, gebogen, um den Innenflansch zu bilden. Insbesondere im Bereich der Ecke der Öffnung ist das Verformen der Innenkante zu einem Innenflansch schwieriger, da ein rund verlaufender Flansch geformt werden muss. Ein zu kleiner Winkel zwischen Tafel und Flansch (also eine große Verformung) kann zu einer Rissbildung des Spantmaterials führen. Ein zu großer Winkel zwischen Tafel und Flansch (also eine kleine Verformung) kann zu einem zu kleinen Flansch führen, der nicht die gewünschte Verstärkungswirkung hat. Lediglich als Beispiel kann der Innenflansch im Bereich des Bodenträgers, der Vertikalstütze und/oder des Spantabschnitts auch weiter verformt sein. So kann in diesen Bereichen der Innenflansch einen Winkel zu der Tafel von bis zu 90° aufweisen.

In noch einer weiteren, nicht zum beanspruchten Gegenstand gehörenden Implementierungsvariante kann das Verfahren ein Verformen eines Abschnitts der Tafel zu einer Diagonalstrebe, die einstückig mit der Tafel gebildet ist, umfassen. Eine übliche Diagonalstrebe wird für gewöhnlich zwischen zwei Spanten angeordnet und an diesen befestigt, wobei die Diagonalstrebe schräg zu jedem der Spante angeordnet ist. Dadurch können Kräfte in Längsrichtung des Flugzeugs (X-Achse) zwischen den Spanten übertragen werden. Zudem können auch Torsionskräfte im Flugzeugrumpf sowie Vertikalkräfte (Z-Achse) übertragen werden. Da sich die Diagonalstrebe von einem der Spante weg erstreckt, kann das bereitgestellte Material, dass die Tafel bildet, die Diagonalstrebe bereits umfassen. Dieser entsprechende Abschnitt der Tafel kann nun verformt werden, insbesondere aus der Ebene der Tafel in die spätere Erstreckungsrichtung gebogen werden.

In einer Implementierungsvariante können die Schritte des Verformens gleichzeitig durchgeführt werden. So können in einem einzigen Verfahrensschritt alle Innenflansche und alle Außenflansche gleichzeitig gebildet werden, was eine hohe Zeitersparnis und somit geringere Kosten bewirkt. Ebenso kann auch der Schritt des Verformens eines Abschnitts der Tafel zu einer Diagonalstrebe gleichzeitig mit dem Verformen aller Innenflansche und/oder aller Außenflansche ausgeführt werden. Gemäß einem zweiten Aspekt zum besseren Verständnis der vorliegenden Offenbarung umfasst ein Rumpfstrukturbauteil für einen Dreiecksbereich eines Flugzeugs eine einstückige Tafel eines Spantmaterials, wobei die Tafel eine Öffnung aufweist. Dabei handelt es sich um eine überwiegend ebene Tafel aus dem Material, aus dem der Spant gebildet ist.

Ferner umfasst das Rumpfstrukturbauteil mindestens einen Innenflansch, der an einer die Öffnung bildenden Innenkante der Tafel geformt ist, und mindestens einen Außenflansch, der an einer Außenkante der Tafel geformt ist. Ein Innenflansch befindet sich näher zu einem Zentrum eines Querschnitts des Flugzeugrumpfes als ein Außenflansch. Beispielsweise kann der mindestens eine Außenflansch ausschließlich an einer Außenkante der Tafel geformt sein, die einer später angebrachten Außenhaut des Flugzeugs zugewandt ist. Ein oder mehrere Innenflansche können an einer Innenkante der Tafel, die dem Zentrum des Flugzeugrumpfs zugewandt ist, und/oder an einer Innenkante der Öffnung der Tafel angeformt werden.

Die einstückige Tafel bildet einen Spantabschnitt, einen Bodenträger und eine Vertikalstütze, die alle jeweils an die Öffnung angrenzen. Somit wird der Spantabschnitt, der Bodenträger und die Vertikalstütze aus einem durchgehenden Material bereitgestellt, ohne dass dafür ein Zusammensetzen verschiedener Bauteile und deren Verbindung/Befestigung aneinander nötig ist.

Das Rumpfstrukturbauteil kann mit dem Verfahren gemäß dem ersten Aspekt oder einer oder mehrerer seiner Implementierungsvarianten hergestellt werden.

Gemäß einem dritten Aspekt zum besseren Verständnis der vorliegenden Offenbarung umfasst ein Flugzeug ein Rumpfstrukturbauteil für einen Dreiecksbereichs gemäß dem zweiten Aspekt.

Das Flugzeug kann eine Vielzahl solcher Rumpfstrukturbauteile umfassen, wodurch die Gesamtbauzeit des Flugzeugs deutlich reduziert werden kann. Dies spart Kosten und vereinfacht die Arbeiten für das entsprechende Personal gerade im Dreiecksbereich.

In einer Implementierungsvariante kann ein Zwischenboden auf dem Bodenträger angebracht und befestigt sein. Bei dem Zwischenboden kann es sich um einen üblichen Kabinenboden eines Flugzeugs handeln, der einen Passagierbereich/Kabinenbereich des Flugzeugs von einem darunterliegenden Cargo-Bereich trennt. Dadurch wird der Dreiecksbereich in dem Flugzeug hergestellt, bevor der zugehörige Arbeitsbereich von dem Zwischenboden bedeckt und eingeschränkt ist.

In einer weiteren Implementierungsvariante kann auf dem mindestens einen Außenflansch ein Stringer mit einer Außenhaut des Flugzeugs befestigt sein. Die Außenhaut des Flugzeugs kann auf einer Vielzahl von Stringern angebracht sein. Ein solcher Stringer kann an dem mindestens einen Außenflansch durch Schweißen, Kleben, Verschrauben oder Nieten befestigt werden. Dabei kann eine übliche Arbeitsweise herangezogen werden, da übliche Spante über sogenannte Clips verfügen, die zunächst an dem Spant angebracht werden und wiederum die Stinger an den Clips angebracht werden. Durch die in den Spant integrierten Außenflansche gemäß der vorliegenden Offenbarung wird die Bauzeit des Flugzeugs ebenfalls signifikant verkürzt, da bei üblicher Bauweise eines Flugzeugs eine Vielzahl von Clips auf einer Vielzahl von Spanten angebracht werden müssen.

Die oben beschriebenen Aspekte, Ausgestaltungen, Varianten und Beispiele können selbstverständlich kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Implementierungsvarianten in der beschriebenen Reihenfolge oder einer bestimmten Kombination der Aspekte und Implementierungsvarianten beschränkt.

Bevorzugte Ausführungsbeispiele der Erfindung werden nun anhand der beigefügten schematischen Zeichnungen näher erläutert, wobei:
- Figur 1: schematisch ein Flugzeug mit Zwischenboden und Dreiecksbereich gemäß dem Stand der Technik zeigt;
- Figur 2: schematisch ein Rumpfstrukturbauteil mit Verstärkungselementen zeigt;
- Figur 3: schematisch ein Rumpfstrukturbauteil mit Verstärkungselementen und Diagonalstrebe zeigt;
- Figur 4: schematisch eine Detailansicht eines Verstärkungselements und der Diagonalstrebe aus Figur 3 zeigt;
- Figur 5: schematisch ein Rumpfstrukturbauteil mit Verstärkungselementen zeigt;
- Figur 6: schematisch ein Rumpfstrukturbauteil mit durchgängigem Innenflansch zeigt;
- Figur 7: schematisch ein Rumpfstrukturbauteil mit durchgängigem Innenflansch und Diagonalstrebe zeigt;
- Figur 8: schematisch ein Rumpfstrukturbauteil mit unterschiedlichen Materialstärken und Diagonalstrebe zeigt; und
- Figur 9: schematisch ein Ablaufdiagramm eines Verfahrens zum Herstellen eines Rumpfstrukturbauteils zeigt.

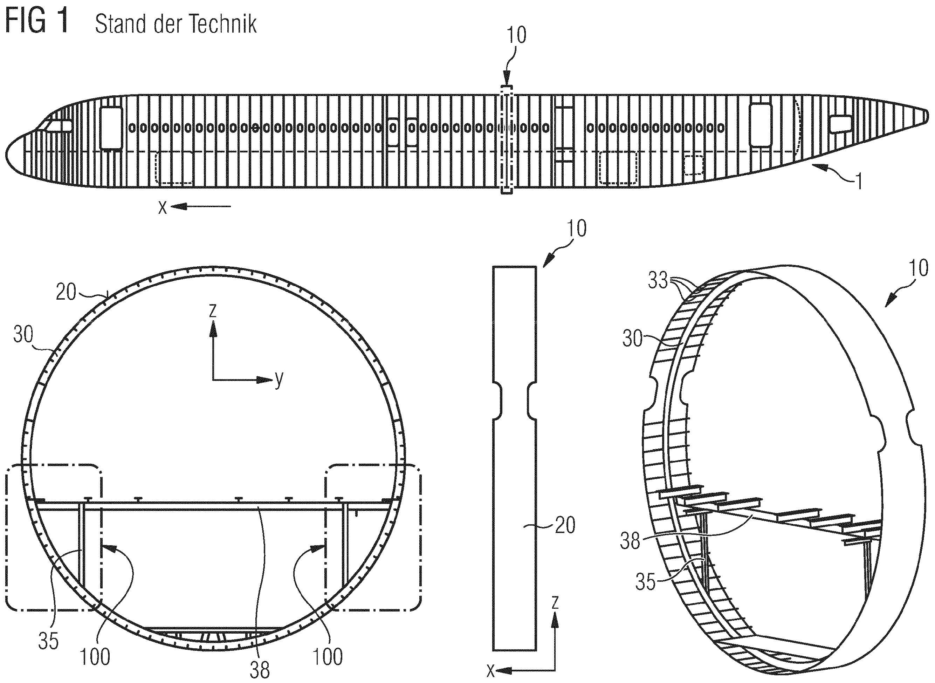

Figur 1 zeigt schematisch ein Flugzeug 1 mit Zwischenboden 38 und Dreiecksbereich 100 gemäß dem Stand der Technik. Das Flugzeug 1 wird aus einer Vielzahl von Rahmen 10 hergestellt, die alle die gleiche oder eine sehr ähnliche Bauform aufweisen. So ein Rahmenelement 10 umfasst einen umlaufenden Spant 30, eine Außenhaut 20 sowie Stringer 33, die auf einer Innenseite der Außenhaut 20 angebracht sind. Selbstverständlich muss die Außenhaut 20 nicht in der dargestellten Länge bereitgestellt werden, sondern kann mehrere Spante 30 überspannen. Gleiches gilt für die Stringer 33.

Der Zwischenboden 38 trennt einen darüberliegenden Kabinenbereich oder Passagierbereich von einem darunterliegenden Gepäckbereich oder Cargo-Deck. Der Zwischenboden 38 ist einerseits an einem Spant 30 befestigt und andererseits durch eine Z-Strebe 35 auf dem Spant 30 abgestützt. Dadurch bilden der Spant 30, ein Abschnitt des Zwischenbodens 38 und die Z-strebe 35 einen Dreiecksbereich 100. In dem Dreiecksbereich 100 können zum Beispiel Leitungen in Längsrichtung des Flugzeugs 1 (X-Achse) verlegt werden.

Für gewöhnlich wird der Zwischenboden 38 oder zumindest ein Querholm des Zwischenbodens 38 eingebaut und an beiden Seiten mit dem Spant 30 verbunden. Anschließend werden die Z-Streben 35 eingebaut und am unteren Ende mit dem Spant 30 und am oberen Ende mit dem Zwischenboden 38 verbunden. Die hierfür notwendigen Arbeiten finden auf dem schrägen (runden) Boden des Cargo-Decks statt. Ferner ist der Arbeitsbereich im Dreiecksbereich 100 durch den bereits eingebauten Zwischenboden 38 eingeschränkt.

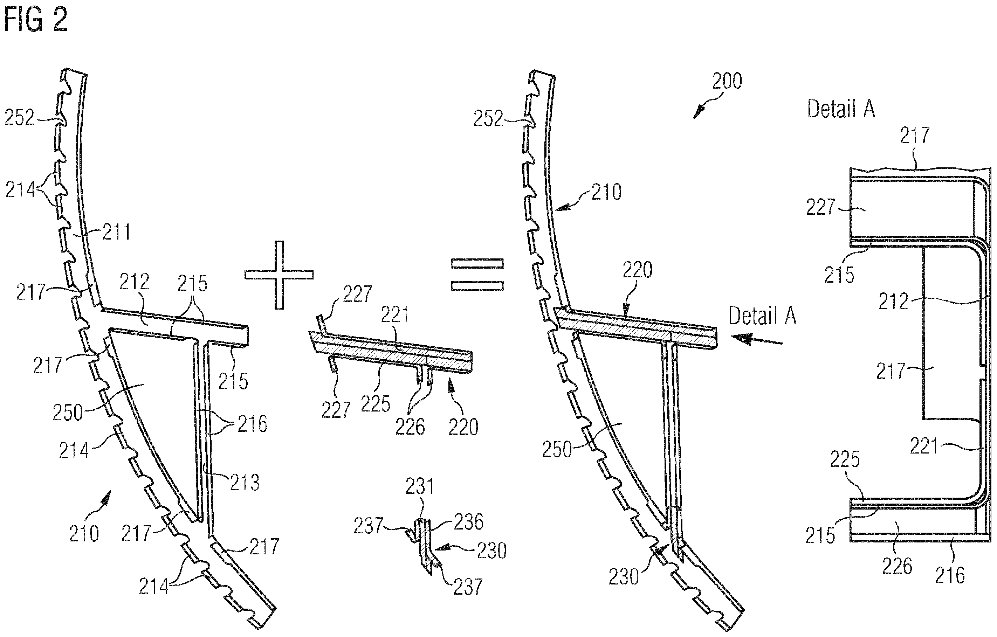

Figur 2 zeigt schematisch ein Rumpfstrukturbauteil 200 gemäß der vorliegenden Offenbarung. Zudem sind Verstärkungselemente 220, 230 dargestellt.

Das Rumpfstrukturbauteil 200 umfasst eine einstückige Tafel 211, 212, 213, die ein durchgängiges Bauteil darstellt. Die Tafel 211, 212, 213 ist zum Beispiel aus einem Spantmaterial hergestellt, sodass sich das Rumpfstrukturbauteil 200 einfach in den übrigen Rumpf des Flugzeugs 1 integrieren lässt. Die Tafel 211, 212, 213 weist eine Öffnung 250 auf, die im Wesentlichen der Öffnung eines üblichen Dreiecksbereichs 100 entspricht.

Das Rumpfstrukturbauteil 200 umfasst mindestens einen Innenflansch 215, 216, 217, der an einer die Öffnung 250 bildenden Innenkante der Tafel 211, 212, 213 geformt ist. Der mindestens eine Innenflansch 215, 216, 217 wird an Innenkanten der Tafel 211, 212, 213, die einem Zentrum des Querschnitts des Flugzeugs 1 zugewandt sind gebildet. Da sie eine Verstärkung des entsprechenden Abschnitts des Rumpfstrukturbauteils 200 darstellen, sind die Innenflansche 215, 216, 217 insbesondere in den Bereichen geformt, die einer Verstärkung bedürfen.

Ferner umfasst das Rumpfstrukturbauteil 200 mindestens einen Außenflansch 214, der an einer Außenkante der Tafel 211, 212, 213 geformt ist. Die Außenkante der Tafel 211, 212, 213 ist eine Kante, die von einem Zentrum des Querschnitts des Flugzeugs 1 abgewandt ist. Der mindestens eine Außenflansch 214 ist aus dem Material der Tafel 211, 212, 213 geformt, also einstückig mit dieser hergestellt. Einerseits bildet der Außenflansch 214 eine Verstärkung des Spants 210 (bzw. des Spantabschnitts 210).

Andererseits übernimmt der mindestens eine Außenflansch 214 die Funktion eines üblichen Clips (nicht dargestellt), der auf einen üblichen Spant 30 aufgebracht wird, um daran wiederum einen Stringer 33 zu befestigen. Bei dem Rumpfstrukturbauteil 200 gemäß der vorliegenden Offenbarung kann ein Stringer 33 direkt an dem Außenflansch 214, der einstückig mit dem übrigen Rumpfstrukturbauteil 200 gebildet ist, angebracht werden. Dadurch wird die Herstellung des Flugzeugs, einschließlich Anbringung der Außenhaut 20 deutlich beschleunigt, da kein Clip installiert werden muss. Das Rumpfstrukturbauteil 200 weist an seiner Außenkante Aussparungen 252 auf, durch die die Stringer 33 verlaufen können.

Die einstückige Tafel 211, 212, 213 bildet einen Spantabschnitt 210, einen Bodenträger 212 und eine Vertikalstütze 213, die alle jeweils an die Öffnung 250 angrenzen. Da das Rumpfstrukturbauteil 200 aus einem Stück gefertigt ist, wird dieser gesamte Dreiecksbereich 100 in einfacher Weise hergestellt, und dies kann sehr schnell erfolgen, beispielsweise durch einen einzelnen Pressvorgang (Verformungsvorgang).

Lediglich als Beispiel kann die einstückige Tafel 211, 212, 213 aus einem Material mit einer Stärke von 1,0 mm bis 4,0 mm, vorzugsweise von 1,5 mm bis 2,5 mm, und besonders bevorzugt von 1,8 mm bestehen. Somit hat auch jeder Flansch 214, 215, 216, 217 die gleiche Materialstärke.

Insbesondere die Innenflansche 215, 216 verstärken den Bodenträger 212 und die Vertikalstütze 213. Beispielsweise können die Innenflansche 215, 216 auf beiden Seiten des Bodenträgers 212 bzw. beiden Seiten der Vertikalstütze 213 angeformt werden, sodass jeweils ein C- oder U-förmiger einstückiger Träger gebildet wird.

In der Implementierungsvariante gemäß Figur 2 sind mehrere Innenkanten zu einem jeweiligen Innenflansch 215, 216, 217 verformt, wobei in einer Ecke zwischen zwei Innenkanten der Innenflansch 215, 216, 217 unterbrochen ist. Dadurch lassen sich die einzelnen Innenflansche 215, 216, 217 einfach und in einem einzigen Verformungsschritt herstellen. Um jedoch die Ecken zwischen den jeweiligen Innenflanschen 215, 216, 217 bzw. die Ecken der Öffnung 250 zu verstärken, können Verstärkungselemente 220, 230 vorgesehen werden. Diese Verstärkungselemente 220, 230 können zudem auch den Bodenträger 212 (im Fall des Verstärkungselements 220) und die Vertikalstütze 213 (im Fall des Verstärkungselements 230) verstärken.

So kann das Verstärkungselement 220, 230 an einem flächigen Abschnitt der Tafel 212, 213 anliegen, zum Beispiel mit einem Abschnitt 221, 231 des Verstärkungselements 220, 230. Ferner kann das Verstärkungselement 220, 230 an dem Innenflansch 215, 216, 217 anliegen, zum Beispiel mit einem Flanschabschnitt 225, 236. Mit anderen Worten hat das Verstärkungselement 220, 230 einen Querschnitt, der dem des Bodenträgers 212 bzw. der Vertikalstütze 213 entspricht, jedoch geringfügig kleiner ausgestaltet ist. Das Verstärkungselement 220, 230 kann somit in den Bodenträger 212 bzw. die Vertikalstütze 213 eingesetzt oder eingebracht werden und daran befestigt werden.

Lediglich als Beispiel kann eine Verstärkungselement 220, 230 eine Materialstärke von 2,0 mm bis 4 mm, vorzugsweise von 2,5 mm bis 3,5 mm und besonders bevorzugt von 2,8 mm aufweisen.

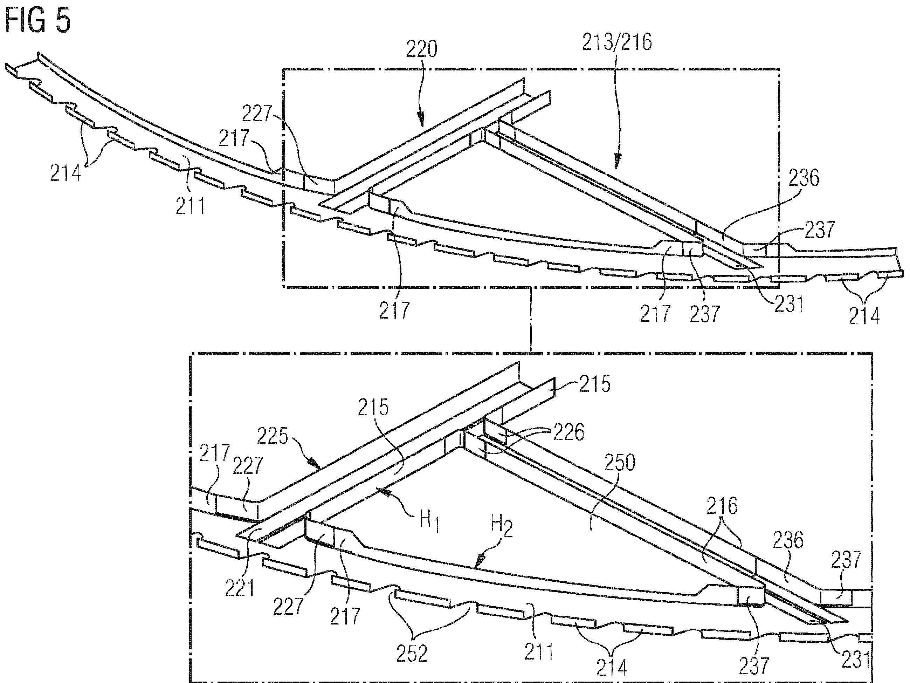

Wie insbesondere aus Figur 5 hervorgeht, kann das Verstärkungselement 220, 230 mindestens einen Fortsatz 226, 227, 237 aufweisen. Solch ein Fortsatz 226, 227, 237 kann sich von einem Flanschabschnitt 225, 236 des Verstärkungselements aus erstrecken und ebenso von einem Ende des Innenflansches 215, 216, 217 aus (über dieses Ende hinaus) erstrecken und einen Bogen aufweisen. Ferner kann der Fortsatz 226, 227, 237 auch einen weiteren Innenflansch 215, 216, 217, der an einer benachbarten Innenkante angeformt ist, überlappen und daran befestigt sein. Somit kann der Fortsatz zwei benachbarte Innenflansche 215, 216, 217 miteinander verbinden und somit verstärken.

In Figur 5 ist auch der Abschnitt 221, 231 des Verstärkungselements 220, 230 im Detail dargestellt, der auf dem flächigen Abschnitt der Tafel 212, 213 aufliegt. Auch diese Abschnitte 221, 231 können einen Fortsatz darstellen, um in einem Übergangsbereich zwischen Spantabschnitt 210, Bodenträger 212 und Vertikalstütze 213 eine Verstärkung zu bilden.

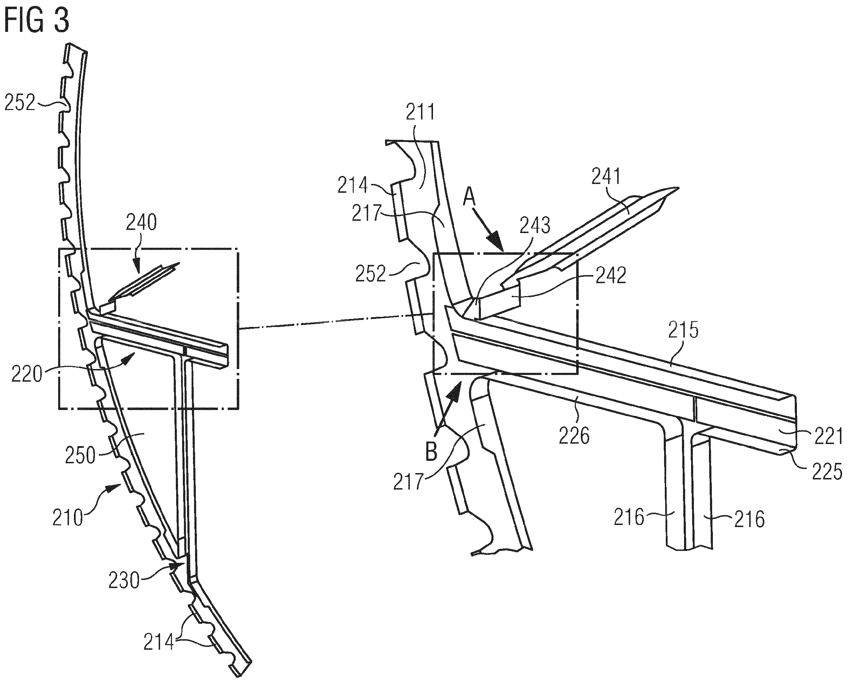

Figur 3 zeigt schematisch ein Rumpfstrukturbauteil 200 mit Verstärkungselementen 220, 230 und ferner mit einer Diagonalstrebe 240. Die Diagonalstrebe 240 dient in erster Linie einer Verbindung zweier Spante 30 in Längsrichtung des Flugzeugs (X-Achse) und verläuft dabei vorzugsweise schräg zur X-Achse.

Um ein Verbinden und Befestigen der Diagonalstrebe 240 an dem Spant 30 (zumindest auf einer Seite der Diagonalstrebe 240) einzusparen, kann die Tafel 211, 212, 213 auch einen Abschnitt aufweisen, der für die Diagonalstrebe 240 vorgesehen ist. Somit kann die Diagonalstrebe 240 ebenfalls einstückig mit dem übrigen Teil der Tafel 211, 212, 213 hergestellt werden. In einem entsprechenden Verformungsschritt während des Herstellen des Rumpfstrukturbauteils 200 kann die Diagonalstrebe 240 geformt werden.

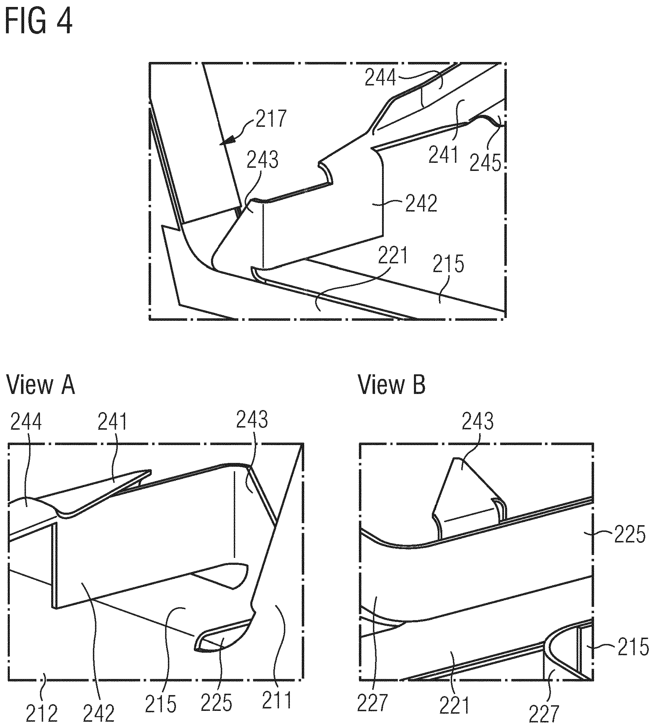

In den Detailansichten der Figuren 3 und 4 ist die Diagonalstrebe 240 in einem ersten Abschnitt 243 mit einem Innenflansch 215 des Bodenträgers 212 einstückig verbunden. Dieser erste Abschnitt 243 wird relativ zu dem Innenflansch 215 verformt (gebogen). Um die gesamte Diagonalstrebe 240 zu formen, können weitere Abschnitte 242, 241 durch Verformen hergestellt werden. Schließlich können auch Flansche 244, 245 an der Diagonalstrebe 240 durch Verformen hergestellt werden.

Eine solche Diagonalstrebe 240 kann zwar über mehrere Verformungsschritte hergestellt werden, ist dafür aber in das Rumpfstrukturbauteil 200 integriert (einstückig gebildet). Dadurch entfallen zumindest auf einer Seite der Diagonalstrebe 240 sämtliche Anschlusselemente und zugehörige Befestigungsarbeiten.

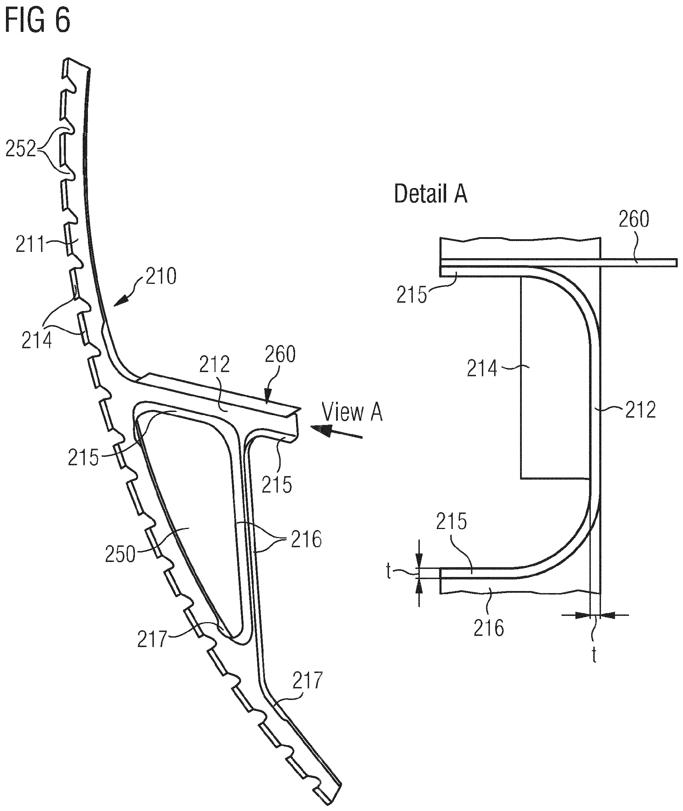

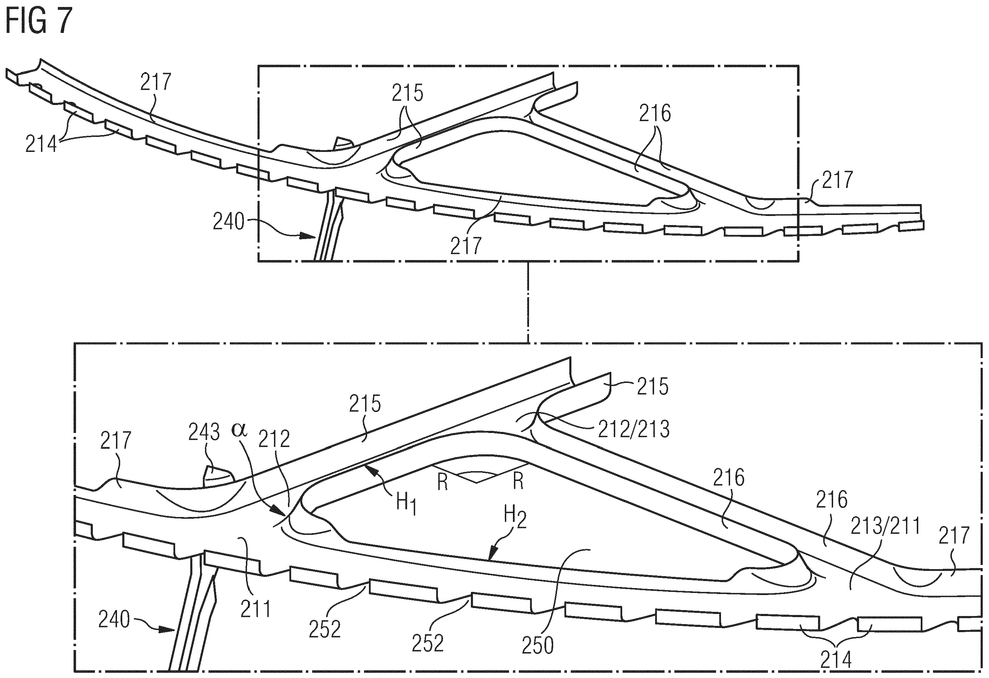

Figur 6 zeigt schematisch ein Rumpfstrukturbauteil 200 mit durchgängigem Innenflansch 215, 216, 217. Weitere Ansichten und Details dieses Rumpfstrukturbauteils 200 sind in Figur 7 dargestellt. Zum Beispiel können mehrere Innenkanten zu einem einzelnen, in mindestens einer Ecke zwischen zwei Innenkanten durchgängig geformten Innenflansch 215, 216, 217 verformt werden. Dadurch kann auf ein gesondertes Verstärkungselement verzichtet werden, da das Rumpfstrukturbauteil 100 in der jeweiligen Ecke bereits verstärkt ausgebildet ist.

Wird der durchgängig geformte Innenflansch 215, 216, 217 durch Pressen geformt, ist es vorteilhaft, die Ecke rund auszugestalten. Die Rundung ist hier so zu verstehen, dass in der Tafelebene die Ecke einen Radius R aufweist, der um eine Achse senkrecht zu der Tafelebene dreht. Andernfalls, also wenn eine scharfe Kante gebildet würde (wie dies in den Figuren 2 bis 5 der Fall ist), könnte das Verformen der Innenkante zu einem Innenflansch 215, 216, 217 zur Rissbildungen führen. Lediglich als Beispiel kann der Innenflansch 215, 216, 217 einen Minimumradius R aufweisen, der von einer Stärke t des Materials der Tafel 211, 212, 213 abhängt. So kann bei einer Stärke t des Materials von 1,0 mm bis 2,8 mm ein Minimumradius R in einer Ecke zwischen 8 cm bis 12 cm, vorzugsweise von 10 cm vorgesehen sein, und bei einer Stärke t des Materials von >2,8 mm bis 3,0 mm ein Minimumradius R von ca. 12 cm vorgesehen sein..

Ferner kann der durchgängig geformte Innenflansch 215, 216, 217 in einer Ecke zwischen zwei Innenkanten einen Winkel α zu der Tafel 211, 212, 213 von 110° bis 140°, vorzugsweise von 120° bis 130° aufweisen. Um ebenfalls Rissbildungen zu vermeiden, wird der Innenflansch 215, 216, 217 nicht weiter verformt, beispielsweise nicht bis zu 90° wie in den Varianten der Figuren 2 bis 5. Allerdings kann der Innenflansch außerhalb der Ecken (also in den geraden Bereichen 215, 216) weiter verformt werden, bis einschließlich 90°.

In Figur 6 ist ferner ein Verstärkungselement 260 gezeigt, welches an dem Bodenträger 212 angebracht werden kann. So kann insbesondere der lastaufnehmende Bereich auf einer Oberseite des Bodenträgers 212 verstärkt werden. Das Verstärkungselement 260 kann auf dem Innenflansch 215 befestigt werden (zum Beispiel durch Schweißen, Verkleben, Verschrauben oder Nieten). Lediglich als Beispiel kann das Verstärkungselement 260 eine Materialstärke von 1,0 mm bis 4,0 mm, vorzugsweise von 1,5 mm bis 3,0 mm, und besonders bevorzugt von 2,0 mm aufweisen.

Andererseits ist es auch möglich, dass Verstärkungselement 260 einstückig mit dem Innenflansch 215 und somit einstückig mit dem ebenen Abschnitt 212 des Bodenträgers 212 und dem übrigen Rumpfstrukturbauteil 200 herzustellen. Dabei kann ein Abschnitt der Tafel nach dem Verformen der Innenkante zu dem Innenflansch 215 zu dem Verstärkungselement 260, wie dargestellt, verformt werden. Alternativ kann das Verstärkungselement 260 auch gleichzeitig mit dem Innenflansch 215 angeformt werden. In diesem Fall hat das Verstärkungselement 260 die gleiche Materialstärke wie der Innenflansch 215 und der ebene Abschnitt 212 des Bodenträgers.

Alternativ ist es auch möglich, dass Verstärkungselement 260 an dem auf dem Bodenträger 212 anzubringenden Bodenelement oder Zwischenboden (nicht dargestellt) vorzusehen. Beim Zusammenbau von Bodenelement/Zwischenboden und Rumpfstrukturbauteil 200 wird dabei die Verstärkung des Bodenträgers 212 erzielt.

Wieder mit Bezug auf Figur 7, können die Innenflansche 215, 216, 217 unterschiedliche Höhen aufweisen. So ist in der dargestellten Implementierungsvariante der Innenflansch 215 und 216 des Bodenträgers 212 und der Vertikalstütze 213 mit einer ersten Höhe H1 ausgebildet. Im Bereich des Spantabschnitts 210 ist der Innenflansch 217 mit einer zweiten Höhe H2 ausgebildet, die geringer als die erste Höhe H1 sein kann. Dadurch lässt sich Material und auch Gewicht einsparen. Beispielsweise kann entlang des Spantabschnitts 210 die Verstärkungswirkung des Innenflansches 217 geringer ausfallen als im Bereich des Bodenträger 212 und der Vertikalstütze 213, durch die größere Lasten abgetragen werden müssen. Diese Bauteile (Bodenträger 212, Vertikalstütze 213) haben eine größere Gefahr des Knickens, weshalb der Innenflansch 215, 216 hier stärker ausgestaltet sein sollte. Im Bereich des Spantabschnitts 210 kann der Innenflansch 217 auch überwiegend entfallen. So kann der Innenflansch 215, 216 vom Bodenträger 212 bzw. Vertikalstütze 213 nach der Ecke auf eine Höhe gleich Null auslaufen. Als weiteres Beispiel kann der Innenflansch in den Ecken mit einer geringeren Höhe angeformt sein als der Innenflansch in den geraden Abschnitten 215, 216.

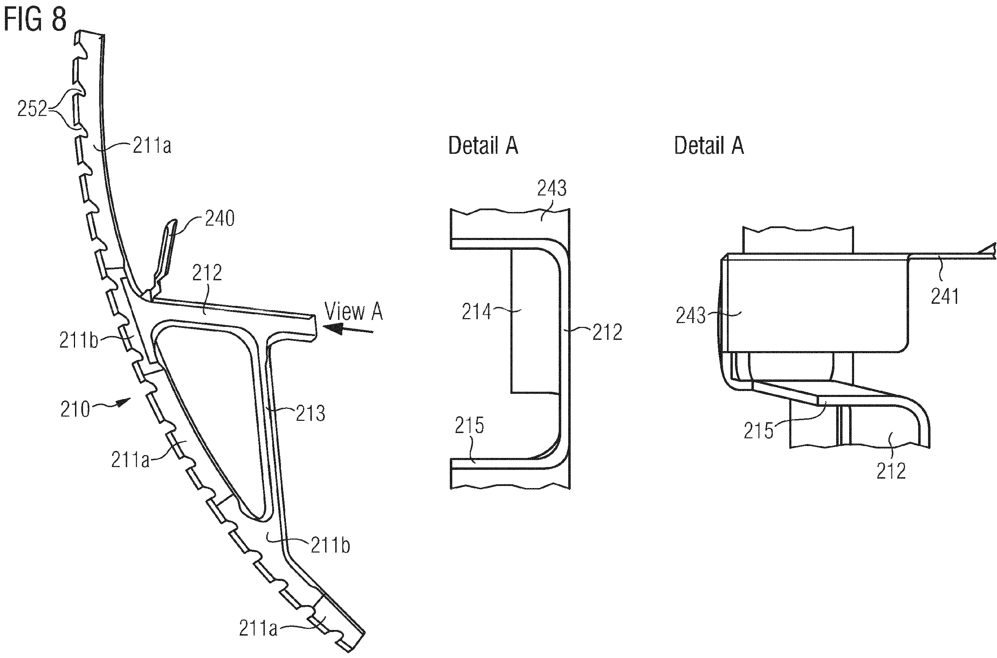

In den Figuren 7 und 8 sind ferner Details einer einstückig hergestellten Diagonalstrebe 240 dargestellt. Diese Diagonalstrebe 240 kann in gleicher Weise ausgeführt werden, wie in der Implementierungsvariante gemäß Figuren 3 und 4, weshalb die Beschreibung der Diagonalstrebe 240 hier nicht wiederholt wird.

Figur 8 zeigt zudem schematisch ein Rumpfstrukturbauteil 200 mit unterschiedlichen Materialstärken. So können Bereiche 211b der Tafel, in die Lasten eingeleitet werden, mit einem stärkeren Material gebildet sein, als die übrigen Bereiche 211a der Tafel. Diese verstärkten Bereiche 211b sind insbesondere die Übergangsbereiche zwischen Spantbereich 210 und Bodenträger 212 sowie zwischen Spantbereich 210 und Vertikalstütze 213. Das stärkere Material 211b kann zum Beispiel eine Dicke/Stärke von 1,5 mm bis 4,0 mm, vorzugsweise von 1,5 mm bis 3,0 mm, und besonders bevorzugt von 2,8 mm aufweisen. Die dünneren Bereiche 211a können hingegen aus einem Material mit einer Stärke von 1,0 mm bis 3,0 mm, vorzugsweise von 1,2 mm bis 2,0 mm, und besonders bevorzugt von 1,4 mm oder 1,8 mm bestehen.

Optional kann auch eine dritte Materialstärke in der einstückigen Tafel vorgesehen sein. So kann zum Beispiel ein Abschnitt der Tafel, der den Bodenträger 212 und/oder die Vertikalstütze 213 bildet, aus einem noch stärkeren Material gebildet werden. Lediglich als Beispiel kann die Materialstärke hier zwischen 2,0 mm bis 5,0 mm, vorzugsweise zwischen 2,5 mm bis 4,5 mm, und besonders bevorzugt 4,0 mm betragen.

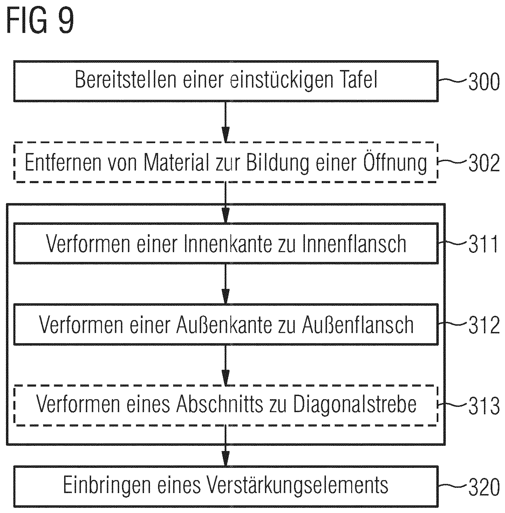

Figur 9 zeigt schematisch ein Ablaufdiagramm eines Verfahrens zum Herstellen eines Rumpfstrukturbauteils 200.

Das Verfahren beginnt in Schritt 300 mit dem Bereitstellen einer einstückigen Tafel 211, 212, 213 eines Spantmaterials, wobei die Tafel eine Öffnung 250 aufweist.

Die Öffnung 250 kann, je nach Material, in einem Schritt 302 durch Entfernen des Spantmaterials aus der Tafel im Bereich der Öffnung 250 hergestellt werden. Zum Beispiel kann hierfür ein Fräsen oder Stanzen eingesetzt werden.

Diese Tafel 211, 212, 213 wird in einem Schritt 311 dahingehend bearbeitet, mindestens eine die Öffnung 250 bildende Innenkante der Tafel zu einem Innenflansch 215, 216, 217 zu verformen. In einem Schritt 312 wird mindestens eine Außenkante der Tafel 211, 212, 213 zu einem Außenflansch 214 verformt.

Die einstückige und verformte Tafel 211, 212, 213 bildet so jeweils an die Öffnung 250 angrenzend einen Spantabschnitt 210, einen Bodenträger 212 und eine Vertikalstütze 213.

In einem optionalen Schritt 313 kann ein Abschnitt der Tafel zu einer Diagonalstrebe 240 verformt werden, sodass die Diagonalstrebe 240 einstückig mit der Tafel 211, 212, 213 gebildet wird.

Die Verformungsschritte 311, 312, 313 können in einem einzigen Verfahrensschritt durchgeführt werden. Beispielsweise können in einem einzigen Pressvorgang alle Flansche 214, 215, 216, 217 sowie zumindest ein Teil der Diagonalstrebe 240 angeformt werden.

Ebenfalls optional kann in Schritt 320 ein Verstärkungselement 220, 230 eingebracht werden, dass an einem flächigen Abschnitt der Tafel 212, 213 und an einem Innenflansch 215, 216, 217 anliegt.

## Patentansprüche

1. Verfahren zur Herstellung eines Rumpfstrukturbauteils (200) einschließlich eines Dreiecksbereichs (100) für ein Flugzeug (1), wobei das Verfahren umfasst:
Bereitstellen (300) einer einstückigen Tafel (211, 212, 213) eines Spantmaterials, wobei die Tafel aus einem Metall oder einer Legierung gefertigt ist und eine Öffnung (250) aufweist;
Verformen (311) mehrerer die Öffnung (250) bildenden Innenkanten der Tafel (211, 212, 213) zu einem einzelnen, in mindestens einer Ecke zwischen zwei Innenkanten durchgängig geformten Innenflansch (215, 216, 217); und
Verformen (312) mindestens einer Außenkante der Tafel (211, 212, 213) zu einem Außenflansch (214),
wobei die einstückige und verformte Tafel (211, 212, 213) jeweils an die Öffnung (250) angrenzend einen Spantabschnitt (210), einen Bodenträger (212) und eine Vertikalstütze (213) bildet, sodass die Öffnung (250) dreiecksförmig ist und die einstückige und verformte Tafel (211, 212, 213) um die Öffnung (250) herum den Dreiecksbereich bildet, und
wobei der durchgängig geformte Innenflansch (215, 216, 217) in einer Ecke zwischen zwei Innenkanten einen Winkel zu der Tafel (211, 212, 213) von 110° bis 140°, vorzugsweise von 120° bis 130°, aufweist.

2. Verfahren gemäß Anspruch 1, wobei das Bereitstellen (300) der Tafel (211, 212, 213) ein Entfernen (302) des Spantmaterials aus der Tafel (211, 212, 213) im Bereich der Öffnung (250) umfasst,
wobei, vorzugsweise, das Entfernen (302) ein Fräsen oder Stanzen umfasst.

3. Verfahren gemäß Anspruch 1 oder 2, ferner umfassend:
Einbringen (320) eines Verstärkungselements (220, 230), wobei das Verstärkungselement (220, 230) an einem flächigen Abschnitt der Tafel (212, 213) und an mindestens einem Abschnitt des Innenflanschs (215, 216, 217) anliegt.

4. Verfahren gemäß Anspruch 3, wobei das Verstärkungselement (220, 230) mindestens einen Fortsatz (226, 227, 237) aufweist, der sich von einem Ende des Innenflansches (215, 216, 217) aus erstreckt und einen Bogen aufweist.

5. Verfahren gemäß einem der Ansprüche 1 bis 4, wobei das Bereitstellen (300) der einstückigen Tafel (211, 212, 213) ein Bereitstellen einer Tafel (211, 212, 213) mit Bereichen unterschiedlicher Dicke umfasst,
wobei insbesondere in einem Bereich, in dem sich der Spantabschnitt (210) mit dem Bodenträger (212) und/oder der Vertikalstütze (213) schneidet, die Tafel (211b) dicker ausgebildet ist.

6. Verfahren gemäß Anspruch 1, wobei der durchgängig geformte Innenflansch (215, 216, 217) unterschiedliche Höhen aufweist.

7. Verfahren zur Herstellung eines Rumpfstrukturbauteils (200) einschließlich eines Dreiecksbereichs (100) für ein Flugzeug (1), wobei das Verfahren umfasst:
Bereitstellen (300) einer einstückigen Tafel (211, 212, 213) eines Spantmaterials, wobei die Tafel aus einem Metall oder einer Legierung gefertigt ist und eine Öffnung (250) aufweist;
Verformen (311) mehrerer Innenkanten zu einem jeweiligen Innenflansch (215, 216, 217), wobei in einer Ecke zwischen zwei Innenkanten die jeweiligen Innenflansche (215, 216, 217) unterbrochen sind;
Verformen (312) mindestens einer Außenkante der Tafel (211, 212, 213) zu einem Außenflansch (214);
Einbringen (320) eines Verstärkungselements (220, 230), wobei das Verstärkungselement (220, 230) an einem flächigen Abschnitt der Tafel (212, 213) und an einem der Innenflansche (215, 216, 217) anliegt, und wobei das Verstärkungselement (220, 230) mindestens einen Fortsatz (226, 227, 237) aufweist, der sich von einem Ende des Innenflansches (215, 216, 217) aus erstreckt, einen Bogen aufweist, und einen weiteren der Innenflansche überlappt und an diesem befestigt ist,
wobei die einstückige und verformte Tafel (211, 212, 213) jeweils an die Öffnung (250) angrenzend einen Spantabschnitt (210), einen Bodenträger (212) und eine Vertikalstütze (213) bildet, sodass die Öffnung (250) dreiecksförmig ist und die einstückige und verformte Tafel (211, 212, 213) um die Öffnung (250) herum den Dreiecksbereich bildet

8. Verfahren gemäß einem der Ansprüche 1 bis 7, ferner umfassend:
Verformen (313) eines Abschnitts der Tafel (211, 212, 213) zu einer Diagonalstrebe (240), die einstückig mit der Tafel (211, 212, 213) gebildet ist.

9. Verfahren gemäß einem der Ansprüche 1 bis 8, wobei die Schritte des Verformens (311, 312, 313) gleichzeitig durchgeführt werden.

10. Verfahren gemäß einem der Ansprüche 1 bis 9, wobei der Bodenträger (212) dazu eingerichtet ist, einen Kabinenboden (38) des Flugzeugs (1) daran anzubringen.

11. Rumpfstrukturbauteil (200) einschließlich eines Dreiecksbereichs (100) für ein Flugzeug (1), wobei das Rumpfstrukturbauteil (200) umfasst:
eine einstückige Tafel (211, 212, 213) eines Spantmaterials, wobei die Tafel aus einem Metall oder einer Legierung gefertigt ist und eine Öffnung (250) aufweist,
einen Innenflansch (215, 216, 217), der an mehreren die Öffnung (250) bildenden Innenkanten der Tafel (211, 212, 213) und in mindestens einer Ecke zwischen zwei Innenkanten durchgängig geformt ist; und
mindestens einen Außenflansch (214), der an einer Außenkante der Tafel (211, 212, 213) geformt ist,
wobei die einstückige Tafel (211, 212, 213) einen Spantabschnitt (210), einen Bodenträger (212) und eine Vertikalstütze (213), die alle jeweils an die Öffnung (250) angrenzen, bildet, sodass die Öffnung (250) dreiecksförmig ist und die einstückige Tafel (211, 212, 213) um die Öffnung (250) herum den Dreiecksbereich bildet, und
wobei der durchgängig geformte Innenflansch (215, 216, 217) in einer Ecke zwischen zwei Innenkanten einen Winkel zu der Tafel (211, 212, 213) von 110° bis 140°, vorzugsweise von 120° bis 130°, aufweist.

12. Rumpfstrukturbauteil (200) einschließlich eines Dreiecksbereichs (100) für ein Flugzeug (1), wobei das Rumpfstrukturbauteil (200) umfasst:
eine einstückige Tafel (211, 212, 213) eines Spantmaterials, wobei die Tafel aus einem Metall oder einer Legierung gefertigt ist und eine Öffnung (250) aufweist, wobei die einstückige Tafel (211, 212, 213) einen Spantabschnitt (210), einen Bodenträger (212) und eine Vertikalstütze (213), die alle jeweils an die Öffnung (250) angrenzen, bildet, sodass die Öffnung (250) dreiecksförmig ist und die einstückige Tafel (211, 212, 213) um die Öffnung (250) herum den Dreiecksbereich bildet,
mehrere Innenflansche (215, 216, 217), die jeweils an einer die Öffnung (250) bildenden Innenkante der Tafel (211, 212, 213) gebildet sind, wobei in einer Ecke zwischen zwei Innenkanten die jeweiligen Innenflansche (215, 216, 217) unterbrochen sind;
mindestens einen Außenflansch (214), der an einer Außenkante der Tafel (211, 212, 213) geformt ist; und
ein Verstärkungselement (220, 230), das an einem flächigen Abschnitt der Tafel (212, 213) und an einem der Innenflansche (215, 216, 217) anliegt,
wobei das Verstärkungselement (220, 230) mindestens einen Fortsatz (226, 227, 237) aufweist, der sich von einem Ende des einen Innenflansches (215, 216, 217) aus erstreckt, einen Bogen aufweist, und einen weiteren der Innenflansche überlappt und an diesem befestigt ist.

13. Flugzeug (1), umfassend:
ein Rumpfstrukturbauteil (200) einschließlich eines Dreiecksbereichs (100) gemäß Anspruch 11 oder 12.

14. Flugzeug (1) gemäß Anspruch 13, wobei ein Zwischenboden (38) auf dem Bodenträger (212) angebracht und befestigt ist.

15. Flugzeug (1) gemäß Anspruch 13 oder 14, wobei an dem mindestens einen Außenflansch (214) ein Stringer (33) mit einer Außenhaut (20) des Flugzeugs (1) befestigt ist.

## Claims

1. Method for producing a fuselage structural component (200) including a triangular region (100) for an aircraft (1), wherein the method comprises:
providing (300) an integral board (211, 212, 213) of a former material, wherein the board is made of a metal or an alloy and has an opening (250),
deforming (311) a plurality of internal edge of the board (211, 212, 213) that form the opening (250) to a single internal flange (215, 216, 217) formed continuously in at least one corner between two internal edges; and deforming (312) at least one external edge of the board (211, 212, 213) to an external flange (214),
wherein the integral and deformed board (211, 212, 213) forms, in each case adjacent to the opening (250), a former portion (210), a floor beam (212) and a vertical support (213) in such a way that the opening (250) is triangular and the integral and deformed board (211, 212, 213) forms the triangular region about the opening (250), and
wherein the continuously formed internal flange (215, 216, 217) in a corner between two internal edges has an angle of 110° to 140°, preferably of 120° to 130°, in relation to the board (211, 212, 213).

2. Method according to Claim 1, wherein providing (300) the board (211, 212, 213) comprises removing (302) the former material from the board (211, 212, 213) in the region of the opening (250),
wherein removing (302) preferably comprises milling or punching.

3. Method according to Claim 1 or 2, furthermore comprising:
incorporating (320) a reinforcement element (220, 230), wherein the reinforcement element (220, 230) bears on a planar portion of the board (212, 213) and on at least one portion of the internal flange (215, 216, 217).

4. Method according to Claim 3, wherein the reinforcement element (220, 230) has at least one appendage (226, 227, 237) which extends from one end of the internal flange (215, 216, 217) and has an arc.

5. Method according to one of Claims 1 to 4, wherein providing (300) the integral board (211, 212, 213) comprises providing a board (211, 212, 213) with regions of different thicknesses,
wherein the board (211b) is configured to be thicker in particular in a region in which the former portion (210) intersects the floor beam (212) and/or the vertical support (213).

6. Method according to Claim 1, wherein the continuously formed internal flange (215, 216, 217) has different heights.

7. Method for producing a fuselage structural component (200) including a triangular region (100) for an aircraft (1), wherein the method comprises:
providing (300) an integral board (211, 212, 213) of a former material,
wherein the board is made of a metal or an alloy and has an opening (250),
deforming (311) a plurality of internal edges to a respective internal flange (215, 216, 217), wherein the respective internal flanges (215, 216, 217) are interrupted in a corner between two internal edges; or
deforming (312) at least one external edge of the board (211, 212, 213) to an external flange (214);
incorporating (320) a reinforcement element (220, 230), wherein the reinforcement element (220, 230) bears on a planar portion of the board (212, 213) and on one of the internal flanges (215, 216, 217), and wherein the reinforcement element (220, 230) has at least one appendage (226, 227, 237) which extends from one end of the internal flange (215, 216, 217), has an arc, and overlaps a further one of the internal flanges and is fastened to the latter,
wherein the integral and deformed board (211, 212, 213) forms, in each case adjacent to the opening (250), a former portion (210), a floor beam (212) and a vertical support (213) in such a way that the opening (250) is triangular and the integral and deformed board (211, 212, 213) forms the triangular region about the opening (250).

8. Method according to one of Claims 1 to 7, furthermore comprising:
deforming (313) a portion of the board (211, 212, 213) to a diagonal brace (240) which is formed to be integral to the board (211, 212, 213).

9. Method according to one of Claims 1 to 8, wherein the steps of deforming (311, 312, 313) are carried out simultaneously.

10. Method according to one of Claims 1 to 9, wherein the floor beam (212) is specified for attaching thereto a cabin floor (38) of the aircraft (1).

11. Fuselage structural component (200) including a triangular region (100) for an aircraft (1), wherein the fuselage structural component (200) comprises:
an integral board (211, 212, 213) of a former material, wherein the board is made of a metal or an alloy and has an opening (250),
an internal flange (215, 216, 217) which is formed on a plurality of internal edges of the board (211, 212, 213) that form the opening (250) and in at least one corner is formed continuously between two internal edges; and
at least one external flange (214) which is formed on an external edge of the board (211, 212, 213),
wherein the integral board (211, 212, 213) forms a former portion (210), a floor beam (212) and a vertical support (213), all being in each case adjacent to the opening (250), so that the opening (250) is triangular and the integral board (211, 212, 213) forms the triangular region about the opening (250), and
wherein the continuously formed internal flange (215, 216, 217) in a corner between two internal edges has an angle of 110° to 140°, preferably of 120° to 130°, in relation to the board (211, 212, 213).

12. Fuselage structural component (200) including a triangular region (100) for an aircraft (1), wherein the fuselage structural component (200) comprises:
an integral board (211, 212, 213) of a former material, wherein the board is made of a metal or an alloy and has an opening (250), wherein the integral board (211, 212, 213) forms a former portion (210), a floor beam (212) and a vertical support (213), all being in each case adjacent to the opening (250), so that the opening (250) is triangular and the integral board (211, 212, 213) forms the triangular region about the opening (250),
a plurality of internal flanges (215, 216, 217) which are in each case formed on an internal edge of the board (211, 212, 213) that forms the opening (250), wherein in a corner between two internal edges the respective internal flanges (215, 216, 217) are interrupted;
at least one external flange (214) formed on an external edge of the board (211, 212, 213); and
a reinforcement element (220, 230) which bears on a planar portion of the board (212, 213) and on one of the internal flanges (215, 216, 217),
and wherein the reinforcement element (220, 230) has at least one appendage (226, 227, 237) which extends from one end of the internal flange (215, 216, 217), has an arc, and overlaps a further one of the internal flanges and is fastened to the latter.

13. Aircraft (1), comprising:
a fuselage structural component (200) including a triangular region (100) according to Claim 11 or 12.

14. Aircraft (1) according to Claim 13, wherein an intermediate floor (38) is attached and fastened to the floor beam (212).

15. Aircraft (1) according to Claim 13 or 14, wherein fastened to the at least one external flange (214) is a stringer (33) having an external skin (20) of the aircraft (1).

## Revendications

1. Procédé de fabrication d'un composant structurel de fuselage (200) y compris d'une zone triangulaire (100) pour un aéronef (1), le procédé comprenant :
fourniture (300) d'un panneau (211, 212, 213) monobloc d'un matériau de couple, le panneau étant produit à partir d'un métal ou d'un alliage et comportant une ouverture (250) ;
déformation (311) de plusieurs bords intérieurs du panneau (211, 212, 213) formant l'ouverture (250) pour former un seul rebord intérieur (215, 216, 217) formé de manière continue dans au moins un coin entre deux bords intérieurs ; et déformation (312) d'au moins un bord extérieur du panneau (211, 212, 213) pour former un rebord extérieur (214),
le panneau (211, 212, 213) monobloc et déformé formant respectivement, de manière adjacente à l'ouverture (250), une section de couple (210), un porte-plancher (212) et un support vertical (213) si bien que l'ouverture (250) est triangulaire et le panneau (211, 212, 213) monobloc et déformé forme la zone triangulaire autour de l'ouverture (250), et
le rebord intérieur (215, 216, 217) formé en continu présentant un angle par rapport au panneau (211, 212, 213) de 110° à 140°, de préférence de 120° à 130°, dans un coin entre deux bords intérieurs.

2. Procédé selon la revendication 1, la fourniture (300) du panneau (211, 212, 213) comprenant un enlèvement (302) du matériau de couple du panneau (211, 212, 213) dans la zone de l'ouverture (250),
l'enlèvement (302) comprenant de préférence un fraisage ou un estampage.

3. Procédé selon la revendication 1 ou 2, comprenant en outre :
introduction (320) d'un élément de renforcement (220, 230), l'élément de renforcement (220, 230) reposant sur une section plate du panneau (212, 213) et sur au moins une section du rebord intérieur (215, 216, 217).

4. Procédé selon la revendication 3, l'élément de renforcement (220, 230) comportant au moins un prolongement (226, 227, 237) qui s'étend à partir d'une extrémité du rebord intérieur (215, 216, 217) et comporte un arc.

5. Procédé selon l'une des revendications 1 à 4, la fourniture (300) du panneau (211, 212, 213) monobloc comprenant la fourniture d'un panneau (211, 212, 213) avec des zones d'épaisseur différente,
le panneau (211b) étant plus épais, en particulier dans une zone dans laquelle la section de couple (210) coupe le porte-plancher (212) et/ou le support vertical (213).

6. Procédé selon la revendication 1, le rebord intérieur formé en continu (215, 216, 217) présentant des hauteurs différentes.

7. Procédé de fabrication d'un composant structurel de fuselage (200) y compris d'une zone triangulaire (100) pour un aéronef (1), le procédé comprenant :
fourniture (300) d'un panneau (211, 212, 213) monobloc d'un matériau de couple, le panneau étant produit à partir d'un métal ou d'un alliage et comportant une ouverture (250) ;
déformation (311) de plusieurs bords intérieurs pour former un rebord intérieur (215, 216, 217) respectif, les rebords intérieurs (215, 216, 217) respectifs étant interrompus dans un coin entre deux bords intérieurs ;
déformation (312) d'au moins un bord extérieur du panneau (211, 212, 213) pour former un rebord extérieur (214) ;
introduction (320) d'un élément de renforcement (220, 230), l'élément de renforcement (220, 230) reposant sur une section plate du panneau (212, 213) et sur un des rebords intérieurs (215, 216, 217), et l'élément de renforcement (220, 230) comportant au moins un prolongement (226, 227, 237) qui s'étend depuis une extrémité du rebord intérieur (215, 216, 217), comporte un arc et chevauche un autre des rebords intérieurs et est fixé sur celui-ci,
le panneau (211, 212, 213) monobloc et déformé formant respectivement, de manière adjacente à l'ouverture (250), une section de couple (210), un porte-plancher (212) et un support vertical (213), si bien que l'ouverture (250) est triangulaire et le panneau (211, 212, 213) monobloc et déformé forme la zone triangulaire autour de l'ouverture (250).

8. Procédé selon l'une des revendications 1 à 7, comprenant en outre :
déformation (313) d'une section du panneau (211, 212, 213) en une entretoise diagonale (240) qui est formée de manière monobloc avec le panneau (211, 212, 213).

9. Procédé selon l'une des revendications 1 à 8, les étapes de la déformation (311, 312, 313) étant effectuées simultanément.

10. Procédé selon l'une des revendications 1 à 9, le porte-plancher (212) étant mis au point pour installer un plancher de cabine (38) de l'aéronef (1) sur celui-ci.

11. Composant structurel de fuselage (200) y compris d'une zone triangulaire (100) pour un aéronef (1), le composant structurel de fuselage (200) comprenant :
un panneau (211, 212, 213) monobloc d'un matériau de couple, le panneau étant produit à partir d'un métal ou d'un alliage et comportant une ouverture (250),
un rebord intérieur (215, 216, 217) qui est formé de manière continue sur plusieurs bords intérieurs du panneau (211, 212, 213) formant l'ouverture (250) et dans au moins un coin entre deux bords intérieurs ; et
au moins un rebord extérieur (214) qui est formé sur un bord extérieur du panneau (211, 212, 213),
le panneau (211, 212, 213) monobloc formant une section de couple (210), un porte-plancher (212) et un support vertical (213), qui sont tous adjacents à l'ouverture (250) si bien que l'ouverture (250) est triangulaire et le panneau (211, 212, 213) monobloc forme la zone triangulaire autour de l'ouverture (250), et
le rebord intérieur (215, 216, 217) formé en continu présentant un angle par rapport au panneau (211, 212, 213) de 110° à 140°, de préférence de 120° à 130°, dans un coin entre deux bords intérieurs.

12. Composant structurel de fuselage (200) y compris d'une zone triangulaire (100) pour un aéronef (1), le composant structurel de fuselage (200) comprenant :
un panneau (211, 212, 213) monobloc d'un matériau de couple, le panneau étant produit à partir d'un métal ou d'un alliage et comportant une ouverture (250), le panneau (211, 212, 213) monobloc formant une section de couple (210), un porte-plancher (212) et un support vertical (213), qui sont tous adjacents à l'ouverture (250), si bien que l'ouverture (250) est triangulaire et que le panneau (211, 212, 213) monobloc forme la zone triangulaire autour de l'ouverture (250),
plusieurs rebords intérieurs (215, 216, 217), qui sont formés chacun sur un bord intérieur du panneau (211, 212, 213) formant l'ouverture (250), les rebords intérieurs (215, 216, 217) respectifs étant interrompus dans un coin entre deux bords intérieurs ;
au moins un rebord extérieur (214), qui est formé sur un bord extérieur du panneau (211, 212, 213) ; et
un élément de renforcement (220, 230) qui repose sur une section plate du panneau (212, 213) et sur un des rebords intérieurs (215, 216, 217),
l'élément de renforcement (220, 230) comportant au moins un prolongement (226, 227, 237) qui s'étend depuis une extrémité d'un rebord intérieur (215, 216, 217), comporte un arc, chevauche un autre des rebords intérieurs et est fixé sur celui-ci.

13. Aéronef (1), comprenant :
un composant structurel de fuselage (200) y compris d'une zone triangulaire (100) selon la revendication 11 ou 12.

14. Aéronef (1) selon la revendication 13, un plancher intermédiaire (38) étant installé et fixé sur le porte-plancher (212).

15. Aéronef (1) selon la revendication 13 ou 14, une lisse (33) avec une enveloppe extérieure (20) de l'aéronef (1) étant fixée sur l'au moins un rebord extérieur (214).
